# EUROPEAN PATENT APPLICATION

(11) **EP 4 822 832 A1**
(43) Date of publication of application: **14.10.2026**
(21) Application number: 24932603.4
(22) Date of filing: 25.04.2024
(51) Int. Cl.: H01M 50/10, H01M 10/052, H01M 10/0525, H01M 10/054, H01M 50/204, H01M 50/249

(54) **BATTERY CELL, BATTERY AND ELECTRICAL DEVICE**

(30) Priority: 25.03.2024 CN 202420584524 U
(71) Applicant: Contemporary Amperex Technology Co., Limited, Ningde, Fujian 352100 (CN)
(72) Inventor: CAO, Mengkai, Ningde, Fujian 352100 (CN); HUANG, Shoujun, Ningde, Fujian 352100 (CN); SU, Huasheng, Ningde, Fujian 352100 (CN); ZHENG, Yulian, Ningde, Fujian 352100 (CN); CHEN, Xinxiang, Ningde, Fujian 352100 (CN); CAI, Xianghu, Ningde, Fujian 352100 (CN); WANG, Peng, Ningde, Fujian 352100 (CN)
(74) Representative: Ran, Handong
(86) International application number: PCT/CN2024/089896
(87) International publication number: WO 2025/200074

(57) **Abstract**

A battery cell (100), a battery (200), and an electrical device. The battery cell (100) comprises a housing (10), an electrode assembly (30) and an end cover (20). The housing (10) is provided with a first end part (11) and a second end part (12) opposite to the first end part (11). The first end part (11) is provided with an opening (111). The housing (10) comprises an inner wall surface (13) and an outer wall surface (14). The outer wall surface (14) is provided with a weak structure (141). The weak structure (141) is closer to the opening (111) relative to the second end part (12). The housing (10) comprises a first wall (15) and a second wall (16) connected to the first wall (15). The area of the first wall (15) is greater than the area of the second wall (16). The weak structure (141) is formed on the outer wall surface (14) of the first wall (15). The electrode assembly (30) is arranged in the housing (10). The end cover (20) is in sealed connection with the housing (10) and seals the opening (111).

## Description

### CROSS-REFERENCE TO RELATED APPLICATION

The present application claims priority and benefit to Chinese Patent Application No. 202420584524.9, filed with China National Intellectual Property Administration on March 25, 2024, which is incorporated herein by reference in its entirety.

### TECHNICAL FIELD

The present application relates to the technical field of batteries, and in particular, to a battery cell, a battery, and an electric device.

### BACKGROUND

Energy conservation and emission reduction are the key to the sustainable development of the automobile industry. In this case, electric vehicles have become an important part of the sustainable development of the automobile industry due to their energy conservation and environmental protection advantages. For the electric vehicles, the battery technology is an important factor in their development.

During the charging and discharging process of the battery cell, the electrode assembly of the battery cell may continuously expand and contract. After long-term use, the junction between the housing and the end cover of the battery cell is prone to cracking, which reduces the stability of the battery cell.

### SUMMARY

The present application provides a battery cell, a battery, and an electric device, which can reduce the influence on the insulating property of the battery cell while improving the stability of the battery cell.

A battery cell according to embodiments of the present application includes a housing, an electrode assembly, and an end cover. The housing is provided with a first end part and a second end part opposite to the first end part, and the first end part is provided with an opening. The housing includes an inner wall surface and an outer wall surface, the outer wall surface is provided with a weak structure, and the weak structure is more proximal to the opening than the second end part. The housing includes a first wall and a second wall connected to the first wall, an area of the first wall is larger than an area of the second wall, and the weak structure is formed on an outer wall surface of the first wall. The electrode assembly is disposed in the housing, and the end cover and the housing are connected in a sealed manner to close the opening.

During the charging and discharging process of the battery cell according to the embodiments of the present application, the electrode assembly may continuously expand and contract, and the weak structure may preferentially deform when the electrode assembly expands, which reduces the degree of deformation at a junction between the housing and the end cover caused by the expansion of the electrode assembly, reduces the risk of cracking at the junction between the housing and the end cover, and prolongs the service life of the housing, thereby improving the stability of the battery cell. In addition, since the area of the first wall is larger than the area of the second wall, the first wall is more easily deformed under the action of the electrode assembly. Therefore, by providing the weak structure on the outer wall surface of the first wall, the weak structure can better absorb the deformation of the housing, which reduces the deformation at a junction between the first wall and the end cover caused by the expansion of the electrode assembly, and reduces the risk of cracking at the junction between the first wall and the end cover, thereby prolonging the service life of the housing.

In some embodiments, the weak structure is formed on an outer wall surface of the second wall.

In this way, by providing the weak structure on the outer wall surface of the second wall, the weak structure may preferentially absorb the impact on the outer wall surface of the second wall during the expansion of the electrode assembly, which reduces the deformation at a junction between the second wall and the end cover caused by the expansion of the electrode assembly, and reduces the risk of cracking at the junction between the second wall and the end cover, thereby prolonging the service life of the housing.

In some embodiments, the weak structure is provided with a groove formed on the outer wall surface of the housing, and the groove located on the outer wall surface of the first wall is connected to the groove located on the outer wall surface of the second wall.

In this way, the groove can reduce the thickness of the housing, thereby making it easier to form the weak structure. The groove located on the outer wall surface of the first wall is connected to the groove located on the outer wall surface of the second wall, such that the weak structure exhibits better deformation consistency at the same position of the housing, which is conducive to improving the capability of the weak structure to absorb the impact on the housing.

In some embodiments, the housing includes a first part and a second part connected to the first part. The first part is provided with the first end part, and an end part, distal to the first part, of the second part forms the second end part. A ratio of a height of the first part to a height of the second part in a direction from the first end part to the second end part is greater than or equal to 3:7. The weak structure is located on the second part.

In this way, the weak structure is located on the second part, such that the weak structure is relatively far away from the end cover, and thus the deformation of the housing during the expansion of the electrode assembly can be concentrated in the second part, which reduces the influence on the first part, and reduces the risk of cracking at the junction between the housing of the first part and the end cover, thereby prolonging the service life of the housing.

In some embodiments, the weak structure is provided with a groove formed on the outer wall surface, and a ratio of a thickness of the second part at the groove to a maximum thickness of the second part is greater than or equal to 0.4.

In this way, the weak structure is easily deformed to absorb the impact on the housing; moreover, the weak structure exhibits an appropriate strength and is not prone to breakage.

In some embodiments, the weak structure is provided with a groove formed on the outer wall surface.

In this way, the groove can reduce the thickness of the housing, thereby making it easier to form the weak structure.

In some embodiments, a height of the groove in a direction from the first end part to the second end part is h, and 0.2 mm ≤ h ≤ 7 mm.

In this way, when the height of the groove in the direction from the first end part to the second end part falls within the above range, the formation of the groove can be facilitated, thereby making it easier to form the weak structure, reducing the manufacturing difficulty of the housing, and meanwhile, helping improve the capability of the weak structure to absorb the impact on the housing.

In some embodiments, 0.5 mm ≤ h ≤ 4 mm.

In this way, when the height of the groove in the direction from the first end part to the second end part falls within the above range, the formation of the groove can be facilitated, thereby making it easier to form the weak structure, reducing the manufacturing difficulty of the housing, and meanwhile, helping improve the capability of the weak structure to absorb the impact on the housing.

In some embodiments, a distance between the groove and the opening is H, and t - 0.5 mm ≤ H ≤ 8t, where t is a thickness of the end cover, expressed in mm.

In this way, when the distance between the groove and the opening falls within the above range, the deformation of the housing during the expansion of the electrode assembly can be concentrated in the weak structure, which reduces the influence on the region of the opening, and reduces the risk of cracking at the junction between the housing and the end cover, thereby prolonging the service life of the housing.

In some embodiments, t ≤ H ≤ 5t.

In this way, when the distance between the groove and the opening falls within the above range, the deformation of the housing during the expansion of the electrode assembly can be concentrated in the weak structure, which reduces the influence on the region of the opening, and reduces the risk of cracking at the junction between the housing and the end cover, thereby prolonging the service life of the housing.

In some embodiments, an angle formed between a bottom surface of the groove and a side surface of the groove is an obtuse angle.

In this way, the angle formed between the bottom surface of the groove and the side surface of the groove is an obtuse angle, which can facilitate the formation of the groove and reduce the manufacturing difficulty of the housing, thereby improving the processing precision of the housing and prolonging the service life of a grinding tool.

In some embodiments, the angle formed between the bottom surface of the groove and the side surface of the groove ranges from 95° to 175°.

In this way, when the angle formed between the bottom surface of the groove and the side surface of the groove falls within the above range, the formation of the groove can be facilitated, and the manufacturing difficulty of the housing is reduced, thereby improving the processing precision of the housing and prolonging the service life of the grinding tool.

In some embodiments, the angle formed between the bottom surface of the groove and the side surface of the groove ranges from 110° to 160°.

In this way, when the angle formed between the bottom surface of the groove and the side surface of the groove falls within the above range, the formation of the groove can be facilitated, and the manufacturing difficulty of the housing is reduced, thereby improving the processing precision of the housing and prolonging the service life of the grinding tool.

A battery according to the embodiments of the present application includes a battery cell.

An electric device according to the embodiments of the present application includes a battery cell or a battery. The battery cell or the battery is configured to provide electric energy for the electric device.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

By reading the detailed description of the preferred embodiments below, various additional advantages and benefits will become clear to those of ordinary skill in the art. The drawings are provided solely for the purpose of illustrating the preferred embodiments and shall not be construed as limiting the present application. Furthermore, the same reference numerals in all the drawings denote identical components. In the drawings:
FIG. 1 is a schematic structural diagram of a vehicle according to some embodiments of the present application;
FIG. 2 is a schematic structural diagram of a battery according to some embodiments of the present application;
FIG. 3 is a schematic structural diagram of a battery cell according to some embodiments of the present application;
FIG. 4 is a schematic diagram of an exploded structure of a battery cell according to some embodiments of the present application;
FIG. 5 is a front view of a battery cell according to some embodiments of the present application;
FIG. 6 is a top view of a battery cell according to some embodiments of the present application;
FIG. 7 is a left view of a battery cell according to some embodiments of the present application;
FIG. 8 is a cross-sectional view of FIG. 5 in an A-A direction;
FIG. 9 is an enlarged schematic view of portion I of FIG. 8; and
FIG. 10 is an enlarged schematic view of portion II of FIG. 8.

Description of reference numerals: 100, battery cell; 10, housing; 11, first end part; 111, opening; 12, second end part; 13, inner wall surface; 14, outer wall surface; 141, weak structure; 142, groove; 143, bottom surface; 144, side surface; 15, first wall; 16, second wall; 17, first part; 18, second part; 20, end cover; 30, electrode assembly; 200, battery; 210, case; 300, controller; 400, motor; 1000, vehicle.

### DETAILED DESCRIPTION

Embodiments of the technical solutions of the present application will be described in detail below with reference to the drawings. The following embodiments are merely used to more clearly illustrate the technical solutions of the present application, and therefore, are only exemplary and do not limit the protection scope of the present application.

Unless otherwise defined, all technical and scientific terms used herein have the same meaning as commonly understood by those skilled in the technical field to which the present application belongs. The terms used herein are only used to illustrate the specific embodiments, rather than limit the present application. The terms "include", "comprise", "have", and "provided with", and any variants thereof in the specification and claims of the present application and the above description of the drawings are intended to cover non-exclusive inclusions.

In the description of the embodiments of the present application, the technical terms such as "first" and "second" are only used to distinguish different objects and should not be interpreted as indicating or implying the relative importance or implicitly indicating the number, specific order, or primary and secondary relationship of the technical features referred to. In the description of the embodiments of the present application, unless otherwise explicitly and specifically defined, "plurality of" means two or more.

Reference in the present application to "embodiment" means that a particular feature, structure, or characteristic described in combination with the embodiment may be included in at least one embodiment of the present application. The references of the word in the context of the specification do not necessarily refer to the same embodiment, nor to separate or alternative embodiments exclusive of other embodiments. It will be explicitly and implicitly understood by those skilled in the art that the embodiments described herein may be combined with other embodiments.

In the description of the embodiments of the present application, the term "and/or" is merely a way to describe the association relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "plurality of" refers to two or more (including two). Similarly, "plurality of groups" refers to two or more (including two) groups, and "plurality of pieces" refers to two or more (including two) pieces.

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like indicate orientations or positional relationships based on those shown in the drawings. They are merely for the convenience of describing the embodiments of the present application and simplifying the description, rather than indicating or implying that the device or element referred to must have a specific orientation or be constructed and operated in the specific orientation, and thus should not be construed as a limitation to the embodiments of the present application.

In the description of the embodiments of the present application, unless otherwise explicitly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present application may be interpreted according to specific conditions.

At present, judging from the trends in the market, the application of power batteries is becoming increasingly widespread. Power batteries are not only applied in energy storage power systems, such as hydropower, thermal power, wind power, and solar power stations, but also widely applied in electric transportation vehicles, such as electric bicycles, electric motorcycles, or electric vehicles, as well as in military equipment, aerospace, and other fields. With the continuous expansion of the application field of power batteries, the market demand for power batteries is also constantly increasing.

In the present application, battery cells may include lithium-ion secondary batteries, lithium-ion primary batteries, lithium-sulfur batteries, sodium-lithium-ion batteries, sodium-ion batteries, magnesium-ion batteries, or the like. This is not limited in the embodiments of the present application. The battery cell may be cylindrical, flat, rectangular parallelepiped-shaped, or in other shapes. This is also not limited in the embodiments of the present application. According to the way of encapsulation, battery cells are generally divided into three types: cylindrical battery cells, prismatic battery cells, and pouch battery cells. This is also not limited in the embodiments of the present application.

The battery mentioned in the embodiments of the present application refers to a single physical module including one or a plurality of battery cells to provide higher voltage and capacity. For example, the battery mentioned in the present application may include a battery module, a battery pack, or the like. The battery generally includes a case configured to encapsulate one or a plurality of battery cells. The case can prevent liquid or other foreign matter from affecting the charging or discharging of the battery cells.

A battery cell includes an electrode assembly and an electrolytic solution. The electrode assembly is composed of a positive electrode plate, a negative electrode plate, and a separation film. The battery cell primarily works by the movement of metal ions between the positive electrode plate and the negative electrode plate. The positive electrode plate includes a positive electrode current collector and a positive electrode active substance layer. The surface of the positive electrode current collector is coated with the positive electrode active substance layer. The current collector not coated with the positive electrode active substance layer protrudes from the current collector coated with the positive electrode active substance layer. The current collector not coated with the positive electrode active substance layer serves as a positive electrode tab. Taking lithium-ion batteries as an example, the material of the positive electrode current collector may be aluminum, and the positive electrode active substance may be lithium cobaltate, lithium iron phosphate, ternary lithium, lithium manganate, or the like. The negative electrode plate includes a negative electrode current collector and a negative electrode active substance layer. The surface of the negative electrode current collector is coated with the negative electrode active substance layer. The current collector not coated with the negative electrode active substance layer protrudes from the current collector coated with the negative electrode active substance layer. The current collector not coated with the negative electrode active substance layer serves as a negative electrode tab. The material of the negative electrode current collector may be copper, and the negative electrode active substance may be carbon, silicon, or the like. To ensure the passing of a large current without fusing, a plurality of positive electrode tabs are provided and stacked together, and a plurality of negative electrode tabs are provided and stacked together. The material of the separation film may be polypropylene (PP), polyethylene (PE), or the like.

The battery cell further includes a housing and an end cover. The housing can protect an electrode assembly from the outside to prevent external foreign matter from affecting the charging or discharging of the electrode assembly. The end cover and the housing jointly define an accommodating space for accommodating the electrode assembly, an electrolyte, and other components.

In the prior art, during the charging and discharging process of the battery cell, the electrode assembly of the battery cell may continuously expand and contract. After long-term use, the junction between the housing and the end cover of the battery cell is prone to cracking, thereby reducing the service life of the housing and reducing the stability of the battery cell.

To improve the stability of the battery cell, the present application provides a housing used for the battery cell. An outer wall surface of the housing is provided with a weak structure, and the deformation of the housing during the expansion of the electrode assembly is concentrated at the weak structure, thereby reducing the deformation at the junction between the housing and the end cover, reducing the risk of cracking at the junction between the housing and the end cover, prolonging the service life of the housing, and thus improving the stability of the battery cell.

The battery cell disclosed in the embodiments of the present application can be used in, but is not limited to be used in, electric devices such as vehicles, ships, or aircrafts. The power system of the electric device may be composed of the battery cell, the battery, and the like disclosed in the present application.

The embodiments of the present application provide an electric device using a battery as the power source. The electric device may be, but is not limited to, a mobile phone, a tablet, a laptop computer, an electric toy, an electric tool, an electric bicycle, an electric vehicle, a ship, a spacecraft, or the like. The electric toy may include stationary or mobile electric toys, such as game consoles, electric car toys, electric ship toys, or electric airplane toys. The spacecraft may include airplanes, rockets, space shuttles, spaceships, and the like.

For ease of description, the following embodiments are illustrated by taking a vehicle 1000 as an example of the electric device according to an embodiment of the present application.

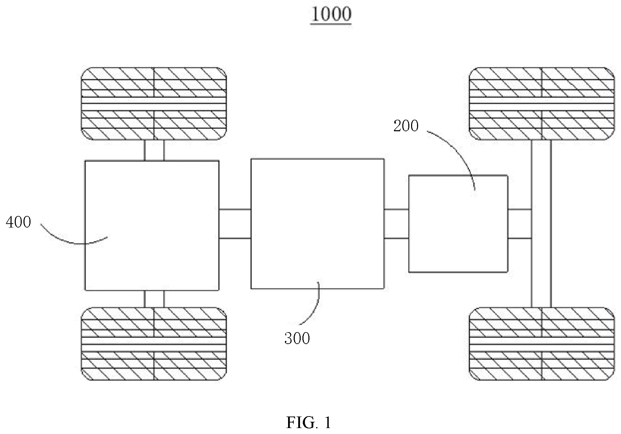

Referring to FIG. 1, FIG. 1 is a schematic structural diagram of the vehicle 1000 according to some embodiments of the present application. The vehicle 1000 may be a fuel vehicle, a gas vehicle, or a new energy vehicle. The new energy vehicle may be a pure electric vehicle, a hybrid vehicle, an extended-range vehicle, or the like. A battery 200 is disposed inside the vehicle 1000, and the battery 200 may be disposed at the bottom, head, or tail of the vehicle 1000. The battery 200 may be configured to power the vehicle 1000. For example, the battery 200 may serve as an operation power source for the vehicle 1000. The vehicle 1000 may further include a controller 300 and a motor 400. The controller 300 is configured to control the battery 200 to power the motor 400, e.g., for operation power needed by the vehicle 1000 for start-up, navigation, and driving.

In some embodiments of the present application, the battery 200 may not only serve as the operation power source for the vehicle 1000, but also as a driving power source for the vehicle 1000 to, replacing or partially replacing fuel or natural gas, provide driving power for the vehicle 1000.

In some embodiments, the battery 200 may be an energy storage device. The energy storage device includes an energy storage container, an energy storage electrical cabinet, and the like.

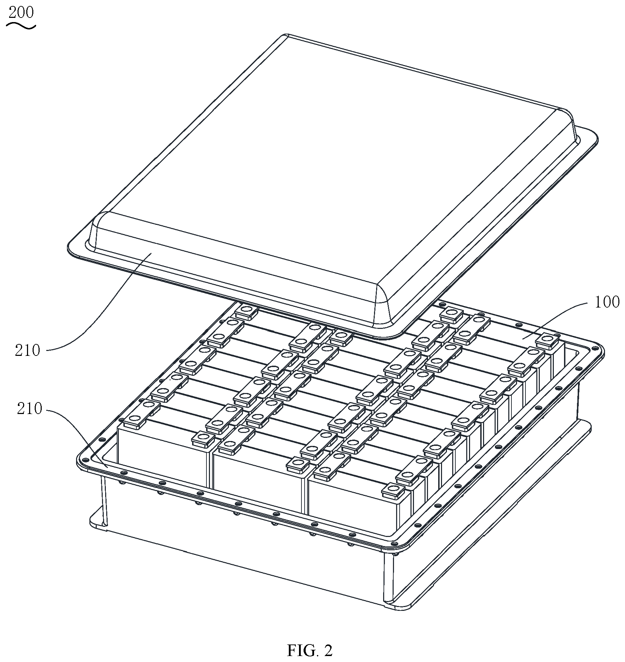

Referring to FIG. 2, FIG. 2 is a schematic diagram of an exploded structure of the battery 200 according to some embodiments of the present application. The battery 200 includes a case 210 and battery cells 100. The battery cells 100 are accommodated in the case 210. The case 210 is configured to provide an accommodating space for the battery cells 100, and the case 210 may be of various structures.

In the battery 200, a plurality of battery cells 100 may be provided, and the plurality of battery cells 100 may be connected in series, in parallel, or in series-parallel. The series-parallel connection means that both series connection and parallel connection are present for the connection among the plurality of battery cells 100. The plurality of battery cells 100 may be directly connected in series, in parallel, or in series-parallel, and then the whole formed by the plurality of battery cells 100 is accommodated in the case 210. Certainly, the situation may also be that in the battery 200, the plurality of battery cells 100 are first connected in series, in parallel, or in series-parallel to form battery modules, and then the plurality of battery modules are connected in series, in parallel, or in series-parallel to form a whole and accommodated in the case 210. The battery 200 may further include other structures. For example, the battery 200 may further include a busbar component for achieving an electrical connection among the plurality of battery cells 100.

Each battery cell 100 may be a secondary battery or a primary battery; it may also be a lithium-sulfur battery, a sodium-ion battery, or a magnesium-ion battery, but is not limited thereto. The battery cell 100 may be cylindrical, flat, rectangular parallelepiped-shaped, or in other shapes.

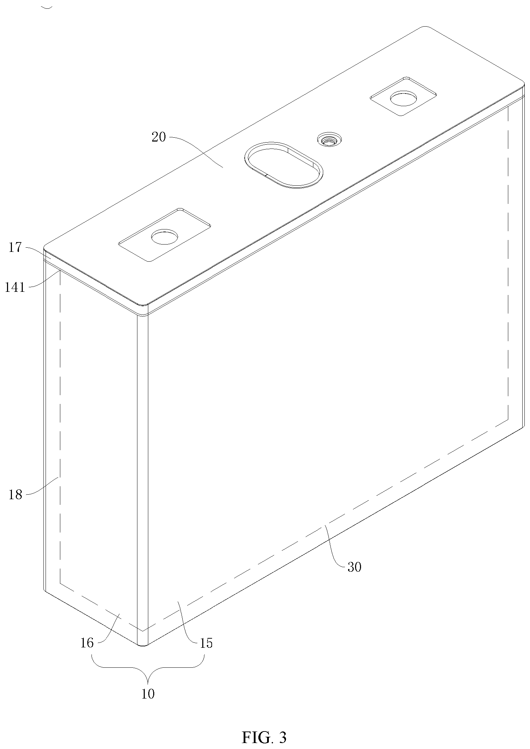

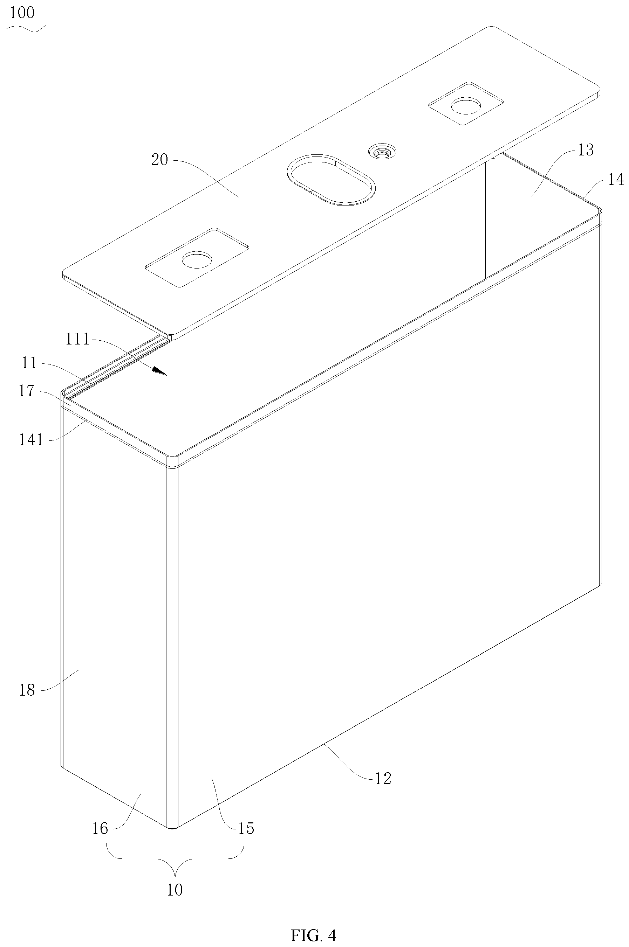

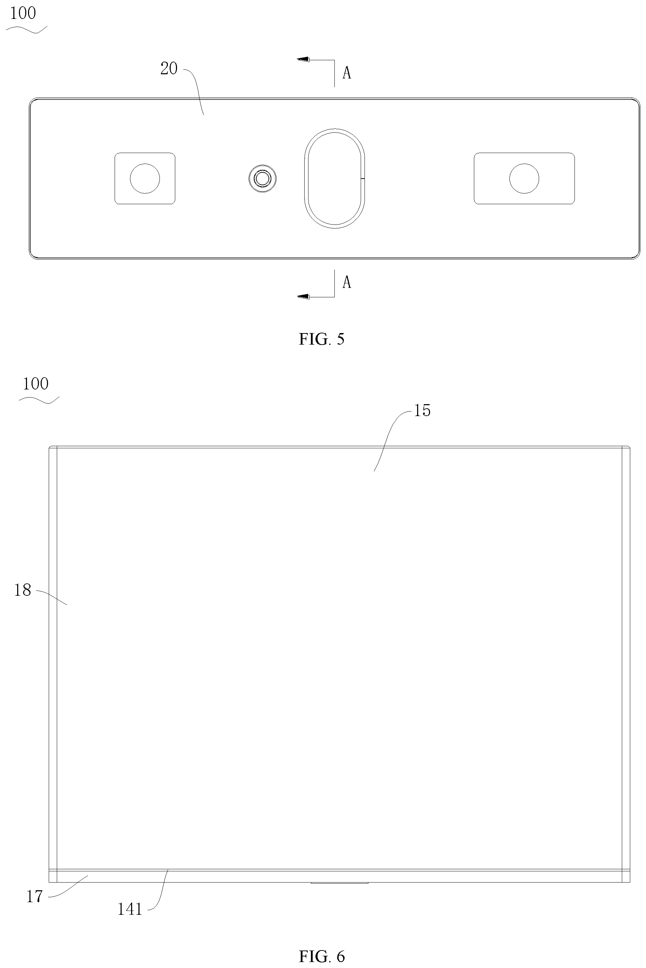

According to some embodiments of the present application, referring to FIGs. 3 to 5, FIG. 3 is a schematic structural diagram of the battery cell 100 according to some embodiments of the present application; FIG. 4 is a schematic diagram of an exploded structure of the battery cell 100 according to some embodiments of the present application; and FIG. 5 is a front view of the battery cell 100 according to some embodiments of the present application. The battery cell 100 according to the embodiments of the present application includes a housing 10, an electrode assembly 3030, and an end cover 20. The housing 10 is provided with a first end part 11 and a second end part 12 opposite to the first end part 11, and the first end part 11 is provided with an opening 111. The housing 10 includes an inner wall surface 13 and an outer wall surface 14, the outer wall surface 14 is provided with a weak structure 141, and the weak structure 141 is more proximal to the opening 111 than the second end part 12. The electrode assembly 30 is disposed in the housing 10, and the end cover 20 and the housing 10 are connected in a sealed manner to close the opening 111.

Specifically, the housing 10 is of a hollow structure, and an accommodating cavity for accommodating the electrode assembly 30 and the electrolytic solution is formed inside the housing. The housing 10 may be in various shapes, such as a cylinder and a rectangular parallelepiped. The shape of the housing 10 may be determined according to the specific shape of the electrode assembly 30. For example, if the electrode assembly 30 is of a cylindrical structure, a cylindrical housing 10 may be used, and the shape of the opening 111 may be a circle; if the electrode assembly 30 is of a rectangular parallelepiped structure, a rectangular parallelepiped housing 10 may be used, and the shape of the opening 111 may be a square. The housing 10 may be made of various materials, such as copper, iron, aluminum, steel, an aluminum alloy, and plastic.

The first end part 11 may be located at the top of the housing 10, the second end part 12 may be located at the bottom of the housing 10, and the electrode assembly 30 may enter the interior of the housing 10 through the opening 111 of the first end part 11.

The inner wall surface 13 may be a surface of the housing 10 that is in contact with an internal environment, and the outer wall surface 14 may be a surface of the housing 10 that is in contact with an external environment. The outer wall surface 14 is provided with the weak structure 141, and the weak structure 141 is configured to withstand the deformation of the junction between the housing 10 and the end cover 20 during the expansion of the electrode assembly 30. The weak structure 141 may be formed by thinning a material, for example, by scoring or grooving on the outer wall surface 14. On the outer wall surface 14, the thickness of a peripheral region of the weak structure 141 is larger than the thickness of the weak structure 141.

The electrode assembly 30 is a core component for achieving the charging and discharging functions of the battery cell 100. The electrode assembly 30 includes a positive electrode plate, a negative electrode plate, and a separator. The positive electrode plate and the negative electrode plate have opposite polarities, and the separator is configured to insulate and isolate the positive electrode plate from the negative electrode plate. The electrode assembly 30 primarily works by the movement of metal ions between the positive electrode plate and the negative electrode plate.

The end cover 20 is a component that seals the opening 111 of the housing 10 to isolate the internal environment of the battery cell 100 from the external environment. The end cover 20 and the housing 10 jointly define an accommodating space for accommodating the electrode assembly 30, the electrolyte, and other components. The shape of the end cover 20 may be adapted to the shape of the housing 10. For example, the housing 10 is of a rectangular parallelepiped structure, and the end cover 20 is of a rectangular plate-shaped structure adapted to the housing 10. For another example, the housing 10 is of a cylindrical structure, and the end cover 20 is of a circular plate-shaped structure adapted to the housing 10. The end cover 20 may also be made of various materials, such as copper, iron, aluminum, steel, an aluminum alloy, and plastic. The end cover 20 and the housing 10 may be made of the same material or different materials. One end cover 20 may be provided, and the end cover 20 and the housing 10 may be connected by welding.

During the charging and discharging process of the battery cell 100 according to the embodiments of the present application, the electrode assembly 30 may continuously expand and contract, and the weak structure 141 may preferentially deform when the electrode assembly 30 expands, which reduces the degree of deformation at the junction between the housing 10 and the end cover 20 caused by the expansion of the electrode assembly 30, reduces the risk of cracking at the junction between the housing 10 and the end cover 20, and prolongs the service life of the housing 10, thereby improving the stability of the battery cell 100.

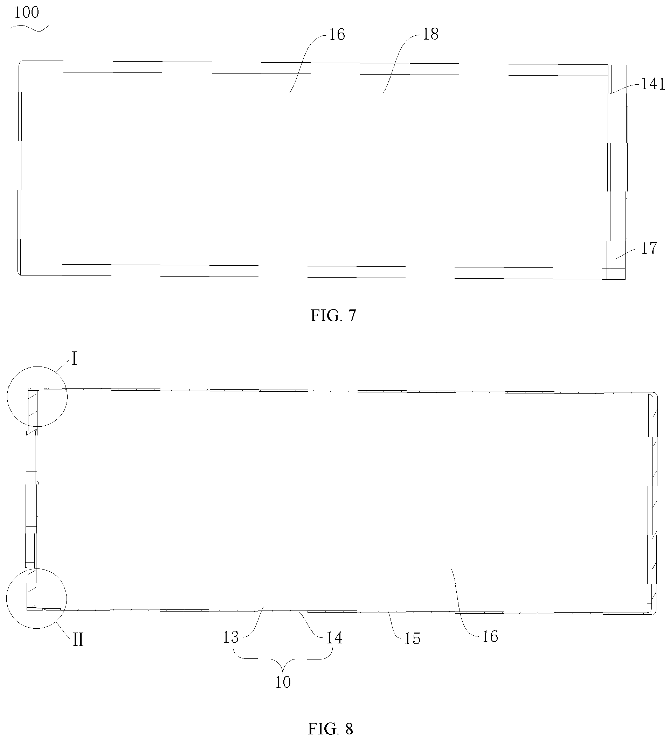

Referring to FIGs. 4, 6, and 7, FIG. 6 is a top view of the battery cell 100 according to some embodiments of the present application; and FIG. 7 is a left view of the battery cell 100 according to some embodiments of the present application. In some embodiments, the housing 10 includes a first wall 15 and a second wall 16 connected to the first wall 15, the area of the first wall 15 is larger than the area of the second wall 16, and the weak structure 141 is formed on an outer wall surface 14 of the first wall 15.

Specifically, the first wall 15 and the second wall 16 may be side walls of the housing 10. When the housing 10 is of a rectangular parallelepiped structure, the first wall 15 may be disposed perpendicular to the second wall 16, and the first wall 15 and the second wall 16 may be perpendicular to the second end part 12. The first wall 15 and the second wall 16 may be of a rectangular plate-shaped structure. Two first walls 15 and two second walls 16 may be provided, the two first walls 15 are disposed opposite to each other, and the two second walls 16 are disposed opposite to each other. When lengths of the first wall 15 and the second wall 16 are consistent, the width of the first wall 15 may be larger than the width of the second wall 16.

The weak structure 141 may be formed by removing part of a material on the outer wall surface 14 of the first wall 15 in a direction toward an inner wall surface 13 of the first wall 15, for example, by scoring or grooving on the outer wall surface 14 of the first wall 15. On the outer wall surface 14 of the first wall 15, the thickness of the peripheral region of the weak structure 141 is larger than the thickness of the weak structure 141.

In this way, since the area of the first wall 15 is larger than the area of the second wall 16, the first wall 15 is more easily deformed under the action of the electrode assembly 30. Therefore, by providing the weak structure 141 on the outer wall surface 14 of the first wall 15, the weak structure 141 can better absorb the deformation of the housing 10, which reduces the deformation at the junction between the first wall 15 and the end cover 20 caused by the expansion of the electrode assembly 30, and reduces the risk of cracking at the junction between the first wall 15 and the end cover 20, thereby prolonging the service life of the housing 10.

Referring to FIGs. 4 and 7, in some embodiments, the weak structure 141 is formed on an outer wall surface 14 of the second wall 16.

Specifically, the weak structure 141 may be formed by removing part of a material on the outer wall surface 14 of the second wall 16 in a direction toward an inner wall surface 13 of the second wall 16, for example, by scoring or grooving on the outer wall surface 14 of the second wall 16. On the outer wall surface 14 of the second wall 16, the thickness of the peripheral region of the weak structure 141 is larger than the thickness of the weak structure 141.

In this way, by providing the weak structure 141 on the outer wall surface 14 of the second wall 16, the weak structure 141 may preferentially absorb the impact on the outer wall surface 14 of the second wall 16 during the expansion of the electrode assembly 30, which reduces the deformation at the junction between the second wall 16 and the end cover 20 caused by the expansion of the electrode assembly 30, and reduces the risk of cracking at the junction between the second wall 16 and the end cover 20, thereby prolonging the service life of the housing 10.

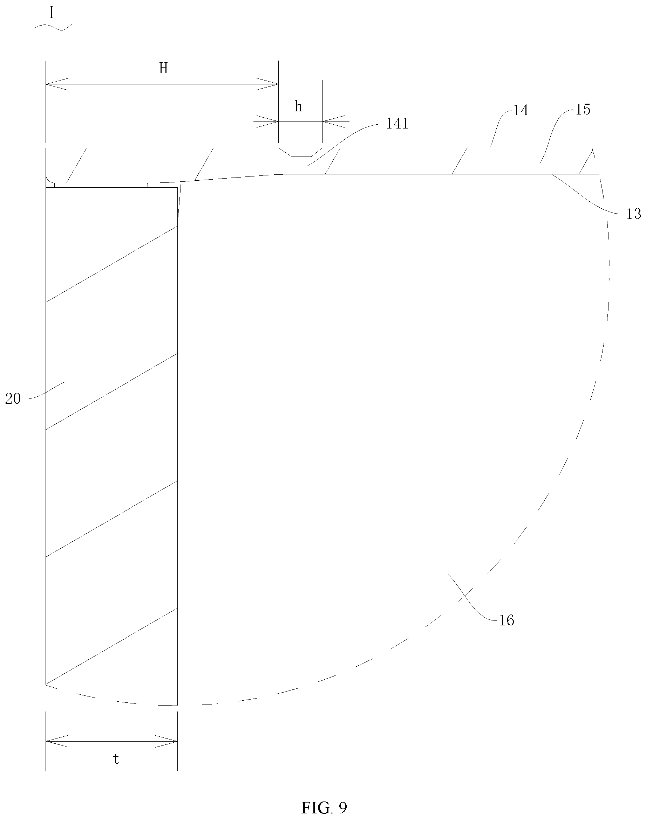

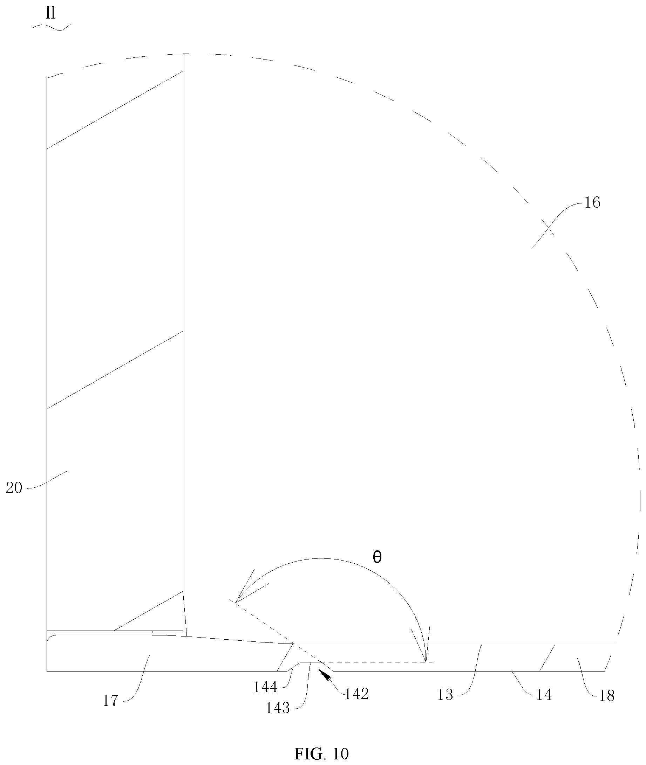

Referring to FIGs. 8 to 10, FIG. 8 is a cross-sectional view of FIG. 5 in an A-A direction; FIG. 9 is an enlarged schematic view of portion I of FIG. 8; and FIG. 10 is an enlarged schematic view of portion II of FIG. 8. In some embodiments, the weak structure 141 is provided with a groove 142 formed on the outer wall surface 14 of the housing 10, and the groove 142 located on the outer wall surface 14 of the first wall 15 is connected to the groove 142 located on the outer wall surface 14 of the second wall 16.

Specifically, the groove 142 may be formed by removing part of a material on the outer wall surface 14, and the cross-sectional shape of the groove 142 may be an arc, a square, a trapezoid, or the like. The groove 142 may extend from the outer wall surface 14 to the inner wall surface 13 in a thickness direction of the housing 10, and the groove 142 may be disposed in a circumferential direction of the outer wall surface 14 of the housing 10. The arrangement of the groove 142 enables a reduction in the thickness of the region of the housing 10 that is provided with the weak structure 141.

In this way, the groove 142 can reduce the thickness of the housing 10, thereby making it easier to form the weak structure 141. The groove 142 located on the outer wall surface 14 of the first wall 15 is connected to the groove 142 located on the outer wall surface 14 of the second wall 16, such that the weak structure 141 exhibits better deformation consistency at the same position of the housing 10, which is conducive to improving the capability of the weak structure 141 to absorb the impact on the housing 10.

Referring to FIG. 4, in some embodiments, the housing 10 includes a first part 17 and a second part 18 connected to the first part 17. The first part 17 is provided with the first end part 11, and an end part, distal to the first part 17, of the second part 18 forms the second end part 12. A ratio of the height of the first part 17 to the height of the second part 18 in a direction from the first end part 11 to the second end part 12 is greater than or equal to 3:7. The weak structure 141 is located on the second part 18.

Specifically, the first part 17 may be a part where the housing 10 is connected to the end cover 20, and the thickness of the first part 17 in the direction from the first end part 11 to the second end part 12 gradually decreases. The second part 18 may be of a uniform-thickness structure, and the first part 17 and the second part 18 may be integrally formed. The ratio of the height of the first part 17 to the height of the second part 18 in the direction from the first end part 11 to the second end part 12 may be 3:7, 2:3, 1:1, or the like. For example, when the height of the housing 10 in the direction from the first end part 11 to the second end part 12 is 100 mm, the height of the first part 17 may be 30 mm, and the height of the second part 18 may be 70 mm; the height of the first part 17 may be 40 mm, and the height of the second part 18 may be 60 mm; or the height of the first part 17 may be 50 mm, and the height of the second part 18 may be 50 mm.

In this way, the weak structure 141 is located on the second part 18, such that the weak structure 141 is relatively far away from the end cover 20, and thus the deformation of the housing 10 during the expansion of the electrode assembly 30 can be concentrated in the second part 18, which reduces the influence on the first part 17, and reduces the risk of cracking at the junction between the housing 10 of the first part 17 and the end cover 20, thereby prolonging the service life of the housing 10.

Referring to FIGs. 9 and 10, in some embodiments, the weak structure 141 is provided with a groove 142 formed on the outer wall surface 14, and a ratio of the thickness of the second part 18 at the groove 142 to the maximum thickness of the second part 18 is greater than or equal to 0.4.

Specifically, the thickness of the second part 18 at the groove 142 may be a distance between a bottom surface 143 of the groove 142 and the inner wall surface 13, the maximum thickness of the second part 18 may be a distance between the outer wall surface 14 and the inner wall surface 13, and the ratio of the thickness of the second part 18 at the groove 142 to the maximum thickness of the second part 18 may be any one point value of 0.4, 0.5, 0.6, 0.7, 0.8, and 0.9, or a value in a range defined by any two of the point values. When the ratio of the thickness of the second part 18 at the groove 142 to the maximum thickness of the second part 18 is less than 0.4, the strength of the weak structure 141 is relatively low, and the weak structure 141 is prone to breakage.

In this way, the weak structure 141 is easily deformed to absorb the impact on the housing 10; moreover, the weak structure exhibits an appropriate strength and is not prone to breakage.

Referring to FIGs. 9 and 10, in some embodiments, the weak structure 141 is provided with a groove 142 formed on the outer wall surface 14.

Specifically, the groove 142 may be formed by removing part of a material on the outer wall surface 14, and the cross-sectional shape of the groove 142 may be an arc, a square, a trapezoid, or the like. The groove 142 may extend from the outer wall surface 14 to the inner wall surface 13 in the thickness direction of the housing 10. The groove 142 may be disposed on the outer wall surface 14 of the first wall 15, may be disposed on the outer wall surface 14 of the second wall 16, or may be disposed in the circumferential direction of the outer wall surface 14 of the housing 10. The arrangement of the groove 142 enables a reduction in the thickness of the region of the housing 10 that is provided with the weak structure 141.

In this way, the groove 142 can reduce the thickness of the housing 10, thereby making it easier to form the weak structure 141.

Referring to FIGs. 4, 9, and 10, in some embodiments, the height of the groove 142 in the direction from the first end part 11 to the second end part 12 is h, and 0.2 mm ≤ h ≤ 7 mm.

Specifically, the height of the groove 142 in the direction from the first end part 11 to the second end part 12 may be a distance between two connecting points between the groove 142 and the outer wall surface 14, and h may be any one point value of 0.2 mm, 0.5 mm, 1 mm, 1.5 mm, 2 mm, 2.5 mm, 3 mm, 3.5 mm, 4 mm, 4.5 mm, 5 mm, 5.5 mm, 6 mm, 6.5 mm, and 7 mm, or a value in a range defined by any two of the point values.

When the height of the groove 142 in the direction from the first end part 11 to the second end part 12 is smaller than 0.2 mm, the processing of the groove 142 is relatively difficult, thereby increasing the manufacturing difficulty of the housing 10. When the height of the groove 142 in the direction from the first end part 11 to the second end part 12 is larger than 7 mm, the effect of the weak structure 141 to withstand deformation is not significantly improved.

In this way, when the height of the groove 142 in the direction from the first end part 11 to the second end part 12 falls within the above range, the formation of the groove 142 can be facilitated, thereby making it easier to form the weak structure 141, reducing the manufacturing difficulty of the housing 10, and meanwhile, helping improve the capability of the weak structure 141 to absorb the impact on the housing 10.

Referring to FIG. 9, in some embodiments, 0.5 mm ≤ h ≤ 4 mm.

Specifically, h may be any one point value of 0.5 mm, 1 mm, 1.5 mm, 2 mm, 2.5 mm, 3 mm, 3.5 mm, and 4 mm, or a value in a range defined by any two of the point values.

In this way, when the height of the groove 142 in the direction from the first end part 11 to the second end part 12 falls within the above range, the formation of the groove 142 can be facilitated, thereby making it easier to form the weak structure 141, reducing the manufacturing difficulty of the housing 10, and meanwhile, helping improve the capability of the weak structure 141 to absorb the impact on the housing 10.

Referring to FIGs. 4, 9, and 10, in some embodiments, a distance between the groove 142 and the opening 111 is H, and t - 0.5 mm ≤ H ≤ 8t, where t is the thickness of the end cover 20, expressed in mm.

Specifically, the distance between the groove 142 and the opening 111 may be a distance between the connecting point, proximal to the first end part 11, between the groove 142 and the outer wall surface 14 and the opening 111. When the thickness of the end cover 20 is 1.5 mm, the distance H between the groove 142 and the opening 111 ranges from 1 mm to 12 mm; that is, the distance H between the groove 142 and the opening 111 may be any one point value of 1 mm, 2 mm, 3 mm, 4 mm, 5 mm, 6 mm, 7 mm, 8 mm, 9 mm, 10 mm, 11 mm, and 12 mm, or a value in a range defined by any two of the point values.

When the distance H between the groove 142 and the opening 111 is less than t - 0.5 mm, the groove 142 is relatively close to the opening 111, such that the deformation of the housing 10 during the expansion of the electrode assembly 30 may affect the region of the opening 111, thereby increasing the risk of cracking at the junction between the housing 10 and the end cover 20. When the distance H between the groove 142 and the opening 111 is greater than 8t, the groove 142 is relatively far away from the opening 111, which reduces the concentration of the deformation of the housing 10 at the weak structure 141, thereby increasing the risk of cracking at the junction between the housing 10 and the end cover 20.

In this way, when the distance between the groove 142 and the opening 111 falls within the above range, the deformation of the housing 10 during the expansion of the electrode assembly 30 can be concentrated in the weak structure 141, which reduces the influence on the region of the opening 111, and reduces the risk of cracking at the junction between the housing 10 and the end cover 20, thereby prolonging the service life of the housing 10.

Referring to FIG. 9, in some embodiments, t ≤ H ≤ 5t.

Specifically, when the thickness of the end cover 20 is 1.5 mm, the distance H between the groove 142 and the opening 111 ranges from 1.5 mm to 7.5 mm; that is, the distance H between the groove 142 and the opening 111 may be any one point value of 1.5 mm, 2.5 mm, 3.5 mm, 4.5 mm, 5.5 mm, 6.5 mm, and 7.5 mm, or a value in a range defined by any two of the point values.

In this way, when the distance between the groove 142 and the opening 111 falls within the above range, the deformation of the housing 10 during the expansion of the electrode assembly 30 can be concentrated in the weak structure 141, which reduces the influence on the region of the opening 111, and reduces the risk of cracking at the junction between the housing 10 and the end cover 20, thereby prolonging the service life of the housing 10.

Referring to FIG. 10, in some embodiments, an angle θ formed between the bottom surface 143 of the groove 142 and a side surface 144 of the groove 142 is an obtuse angle.

Specifically, the groove 142 may be formed by one bottom surface 143 and two side surfaces 144. The bottom surface 143 of the groove 142 may be parallel to the outer wall surface 14, and the side surface 144 of the groove 142 may connect the bottom surface 143 of the groove 142 and the outer wall surface 14 of the housing 10. When the cross-sectional shape of the groove 142 is a square, the angle θ formed between the bottom surface 143 of the groove 142 and the side surface 144 of the groove 142 may be 90°. When the cross-sectional shape of the groove 142 is a trapezoid, the angle θ formed between the bottom surface 143 of the groove 142 and the side surface 144 of the groove 142 may be greater than 90°.

In this way, the angle θ formed between the bottom surface 143 of the groove 142 and the side surface 144 of the groove 142 is an obtuse angle, which can facilitate the formation of the groove 142 and reduce the manufacturing difficulty of the housing 10, thereby improving the processing precision of the housing 10 and prolonging the service life of a grinding tool.

Referring to FIG. 10, in some embodiments, the angle θ formed between the bottom surface 143 of the groove 142 and the side surface 144 of the groove 142 ranges from 95° to 175°.

Specifically, the angle θ formed between the bottom surface 143 of the groove 142 and the side surface 144 of the groove 142 may be any one point value of 95°, 105°, 115°, 125°, 135°, 145°, 155°, 165°, and 175°, or a value in a range defined by any two of the point values.

In this way, when the angle θ formed between the bottom surface 143 of the groove 142 and the side surface 144 of the groove 142 falls within the above range, the formation of the groove 142 can be facilitated, and the manufacturing difficulty of the housing 10 is reduced, thereby improving the processing precision of the housing 10 and prolonging the service life of the grinding tool.

Referring to FIG. 10, in some embodiments, the angle θ formed between the bottom surface 143 of the groove 142 and the side surface 144 of the groove 142 ranges from 110° to 160°.

Specifically, the angle θ formed between the bottom surface 143 of the groove 142 and the side surface 144 of the groove 142 may be any one point value of 110°, 120°, 130°, 140°, 150°, and 160°, or a value in a range defined by any two of the point values.

In this way, when the angle θ formed between the bottom surface 143 of the groove 142 and the side surface 144 of the groove 142 falls within the above range, the formation of the groove 142 can be facilitated, and the manufacturing difficulty of the housing 10 is reduced, thereby improving the processing precision of the housing 10 and prolonging the service life of the grinding tool.

Referring to FIG. 4, the battery cell 100 according to the embodiments of the present application includes a housing 10, an electrode assembly 30, and an end cover 20. The housing 10 is provided with a first end part 11 and a second end part 12 opposite to the first end part 11, and the first end part 11 is provided with an opening 111. The housing 10 is provided with a weak structure 141, and the weak structure 141 is more proximal to the opening 111 than the second end part 12. The electrode assembly 30 is disposed in the housing 10, and the end cover 20 and the housing 10 are connected in a sealed manner to close the opening 111.

In this way, during the charging and discharging process of the battery cell 100, the electrode assembly 30 may continuously expand and contract, and the weak structure 141 may preferentially deform when the electrode assembly 30 expands, which reduces the degree of deformation at the junction between the housing 10 and the end cover 20 caused by the expansion of the electrode assembly 30, reduces the risk of cracking at the junction between the housing 10 and the end cover 20, and prolongs the service life of the housing 10, thereby improving the stability of the battery cell 100.

Finally, it should be noted that the above embodiments are only used to illustrate the technical solutions of the present application, rather than limit the same. Although the present application has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present application, and shall all fall within the scope of the claims and specification of the present application. In particular, the technical features mentioned in the embodiments can be combined in any manner, provided that there is no structural conflict. The present application is not limited to the specific embodiments disclosed herein, but encompasses all technical solutions falling within the scope of the claims.

## Claims

1. A battery cell, comprising:
a housing, wherein the housing is provided with a first end part and a second end part opposite to the first end part, and the first end part is provided with an opening; the housing comprises an inner wall surface and an outer wall surface, the outer wall surface is provided with a weak structure, and the weak structure is more proximal to the opening than the second end part; the housing comprises a first wall and a second wall connected to the first wall, an area of the first wall is larger than an area of the second wall, and the weak structure is formed on an outer wall surface of the first wall;
an electrode assembly, disposed in the housing; and
an end cover, wherein the end cover and the housing are connected in a sealed manner to close the opening.

2. The battery cell according to claim 1, wherein the weak structure is formed on an outer wall surface of the second wall.

3. The battery cell according to claim 2, wherein the weak structure is provided with a groove formed on the outer wall surface of the housing, and the groove located on the outer wall surface of the first wall is connected to the groove located on the outer wall surface of the second wall.

4. The battery cell according to any one of claims 1 to 3, wherein the housing comprises a first part and a second part connected to the first part, the first part is provided with the first end part, and an end part, distal to the first part, of the second part forms the second end part; a ratio of a height of the first part to a height of the second part in a direction from the first end part to the second end part is greater than or equal to 3:7, and the weak structure is located on the second part

5. The battery cell according to claim 4, wherein the weak structure is provided with a groove formed on the outer wall surface, and a ratio of a thickness of the second part at the groove to a maximum thickness of the second part is greater than or equal to 0.4.

6. The battery cell according to claim 1, wherein the weak structure is provided with a groove formed on the outer wall surface.

7. The battery cell according to claim 6, wherein a height of the groove in a direction from the first end part to the second end part is h, and 0.2 mm ≤ h ≤ 7 mm.

8. The battery cell according to claim 7, wherein 0.5 mm ≤ H ≤ 4 mm.

9. The battery cell according to any one of claims 3 and 6 to 8, wherein a distance between the groove and the opening is H, and t - 0.5 mm ≤ H ≤ 8t, wherein t is a thickness of the end cover, expressed in mm.

10. The battery cell according to claim 9, wherein t ≤ H ≤ 5t.

11. The battery cell according to any one of claims 3 and 6 to 10, wherein an angle formed between a bottom surface of the groove and a side surface of the groove is an obtuse angle.

12. The battery cell according to claim 11, wherein the angle formed between the bottom surface of the groove and the side surface of the groove ranges from 95° to 175°.

13. The battery cell according to claim 12, wherein the angle formed between the bottom surface of the groove and the side surface of the groove ranges from 110° to 160°.

14. A battery, comprising the battery cell according to any one of claims 1 to 13.

15. An electric device, comprising the battery cell according to any one of claims 1 to 13 or the battery according to claim 14.
